# EUROPÄISCHE PATENTSCHRIFT

(11) **EP 0 565 773 B1**
(45) Veröffentlichungstag und Bekanntmachung des Hinweises auf die Patenterteilung: **20.12.1995**
(21) Anmeldenummer: 92119332.2
(22) Anmeldetag: 12.11.1992
(51) Int. Cl.: G01M 1/04

(54) **Schnellspannvorrichtung mit Mittenzentrierung zur Befestigung eines Fahrzeugrades auf der Achse einer Auswuchtmaschine**
Quick-damping device with central centering for fixing a vehicle wheel on the axis of a balancing machine
Dispositif de fixation rapide avec centrage central pour le montage d'une roue de véhicule sur l'axe d'une machine d'équilibrage

(30) Priorität: 11.04.1992 DE 9205071 U
(43) Veröffentlichungstag der Anmeldung: 20.10.1993
(73) Patentinhaber: Warkotsch, Horst, D-30938 Burgwedel (DE)
(72) Erfinder: Warkotsch, Horst, D-30938 Burgwedel (DE)
(74) Vertreter: Leine, Sigurd, Dipl.-Ing.

(56) Entgegenhaltungen:
- EP-A- 0 332 763
- EP-A- 0 463 928
- DE-A- 3 641 295
- US-A- 3 889 542

## Beschreibung

Die Erfindung betrifft eine Schnellspannvorrichtung mit Mittenzentrierung der im Oberbegriff des Anspruchs 1 genannten Art zur Befestigung eines Fahrzeugrades auf der Achse einer Auswuchtmaschine.

Durch DE 38 08 755 C2 ist eine Schnellspannvorrichtung der betreffenden Art bekannt. Bei dieser ist auf der Achse fest ein Flansch zur reibschlüssigen Anlage der Felge eines Fahrzeugrades angeordnet. Spannmittel dienen zum Festziehen der Felge gegen den Flansch. Außerdem ist eine Konusanordnung zum Eingriff in das zentrale Loch der Felge vorgesehen. Eine Feder drückt die Konusanordnung in Richtung auf das Zentrierloch. Die Konusanordnung weist ein äußeres Teil mit einer zylindrischen Außenfläche zum Eingriff in das Zentrierloch des Fahrzeugrades und mit einer konischen Innenfläche auf. Außerdem weist die Konusanordnung ein inneres Teil auf, das eine innere Bohrung zum Aufschieben des inneren Teils auf die Achse der Auswuchtmaschine und eine konische Außenfläche aufweist, die zu der konischen Innenfläche des äußeren Teils komplementär geformt ist und an dieser anliegt. Beide Teile der Konusanordnung sind radial spreizbar. An dem äußeren Teil befindet sich ein radialer Flansch mit einer Anlagefläche zur Anlage an der Felge des Fahrzeugrades. Das innere Teil der Konusanordnung ist durch eine Feder entgegen der Festspannrichtung des Fahrzeugrades vorgespannt.

Das innere und das äußere Teil der Konusanordnung sind teilweise in Axialrichtung geschlitzt, so daß sie in diesem Bereich radial spreizbar sind.

Beim Aufsetzen eines Fahrzeugrades auf das äußere Teil der Konusanordnung stößt die Felge gegen den radialen Flansch an dem äußeren Teil, so daß dieses in Aufsetzrichtung entgegen der Vorspannrichtung der an dem inneren Teil der Konusanordnung liegenden Feder mitgenommen wird. Durch die Vorspannung der Feder entsteht eine Kraft, durch die der spreizbare Bereich des äußeren Teils der Konusanordnung auf der konischen Außenfläche des inneren Teils aufgleitet und somit nach außen gespreizt wird, wodurch sich die zylindrische Außenfläche an der Innenkante des Zentrierlochs der Felge anlegt. Durch die radiale Spreizung erfolgt eine spielfreie Zentrierung des Zentrierloches und damit der Felge gegenüber der Achse der Auswuchtmaschine.

Ein Nachteil dieser bekannten Schnellspannvorrichtung besteht darin, daß die radiale Spreizbarkeit verhältnismäßig gering ist, da das äußere Teil nur teilweise radial spreizbar ist, indem es eine teilweise geschlitzte Hülse bildet. Über den nicht geschlitzten Teil der Hülse hängen die spreizbaren Teile zusammen, wodurch die Spreizbarkeit entsprechend der geringen radialen Elastizität sehr begrenzt ist. Es ist daher erforderlich, praktisch für jeden Zentrierlochdurchmesser eine gesonderte Konusanordnung vorzuhalten. Dies stellt einen erhöhten Aufwand mit hohen Kosten dar.

Der Erfindung liegt die Aufgabe zugrunde, eine Schnellspannvorrichtung der betreffenden Art zu schaffen, die für unterschiedliche Zentrierlochdurchmesser geeignet ist.

Die der Erfindung zugrundeliegende Aufgabe wird durch die im Kennzeichen des Anspruchs 1 angegebene Lehre gelöst.

Grundgedanke dieser Lehre ist es, die spreizbaren Elemente des äußeren Teils der Konusanordnung als Segmente auszubilden, die völlig unabhängig voneinander sind und sich so ungehindert über einen größeren radialen Bereich praktisch parallel zu sich selbst bewegen können, ohne daß dabei ein Verklemmen, Verkanten oder ein zu großes Verbiegen auftritt. Die an sich losen Segmente sind dabei durch Federmittel an dem inneren Teil gehalten.

Die Federmittel können durch einen elastischen Ring gebildet sein, der die Segmente mit Spannung umschließt. Der elastische Ring kann dabei zweckmäßigerweise in einer Umfangsnut der Segmente verlaufen.

Eine andere zweckmäßige Weiterbildung der Erfindung besteht darin, daß die Segmente durch Führungen gegen Bewegungen in Umfangsrichtung gesichert sind. Dies ist vorteilhaft, weil dadurch ihre Anordnung in Umfangsrichtung sich nicht verändern kann, was die Wuchtgenauigkeit beeinträchtigen würde. Die Führungen können dabei durch Stifte gebildet sein, die nach innen aus den Segmenten herausragen und in axial verlaufenden Schlitzen in dem inneren Teil der Konusanordnung geführt sind.

Schließlich besteht eine zweckmäßige Weiterbildung darin, daß die Segmente radial nach innen gerichtete Kanten aufweisen, die gegenüberliegende Kanten des inneren Teils der Konusanordnung hintergreifen und so ein axiales Herabrutschen der Segmente von dem inneren Teil verhindern.

Anhand der Zeichnung soll die Erfindung näher erläutert werden.
- Fig. 1: zeigt die eingangs beschriebene vorbekannte Schnellspannvorrichtung im Schnitt,
- Fig. 2: zeigt eine Konusanordnung zur erfindungsgemäßen Verwendung bei einer Einrichtung gemäß Fig. 1, in Radialansicht und teilweise geschnitten, und
- Fig. 3: zeigt eine Axialansicht der Konusanordnung gemäß Fig. 2.

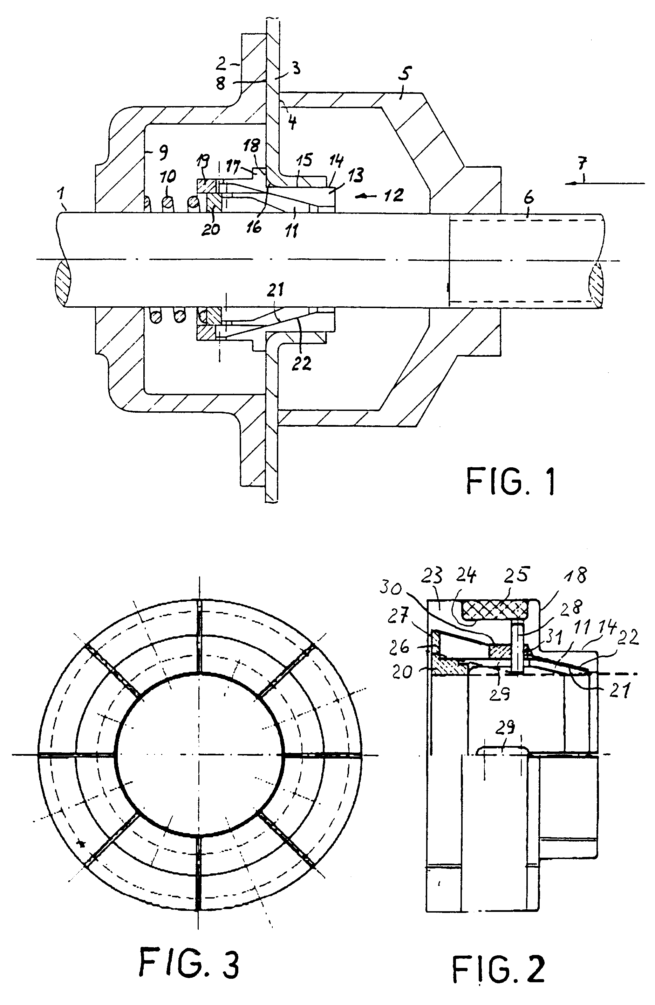

Fig. 1 zeigt eine Achse 1 einer nicht dargestellten Auswuchtmaschine. Auf der Achse sitzt fest ein topfartiger Flansch 2, gegen den eine nur teilweise dargestellte Felge 3 eines ebenfalls nicht dargestellten Fahrzeugrades durch einen Rand 4 eines Drucktopfes 5 gedrückt wird, der mittels einer nicht dargestellten, auf ein Außengewinde 6 der Achse 1 aufgeschraubten Spannschraube in Richtung eines Pfeiles 7 gedrückt wird. Die Felge 3 liegt so reibschlüssig verbunden und fest an einer Anlagefläche 8 des Flansches 2 an.

An einem Boden 9 des topfförmigen Flansches 2 stützt sich eine Feder 10 ab, die an einem inneren Teil 11 einer als Konusanordnung 12 ausgebildeten Spannzange anliegt, deren äußeres Teil 13 mit einer zylindrischen Außenfläche 14 an einer zylindrischen Innenfläche 15 eines Zentrierloches 16 der Felge 3 anliegt.

Von der zylindrischen Außenfläche 14 aus erstreckt sich ein radialer Flansch 17 nach außen, der mit einer radialen Anlagefläche 18 an der Felge 3 anliegt und somit die Reaktionskraft für die Feder 10 liefert.

Die Teile 11 und 13 der Konusanordnung 12 weisen ringförmige Teile 19 und 20 auf, von denen aus sich in der Zeichnung nach rechts jeweils geschlitzte Teile erstrecken, wobei das innere Teil 11 eine konische Außenfläche 21 und das Teil 13 eine konische Innenfläche 22 aufweist, so daß bei deren Aufgleiten sich der geschlitzte Teil des inneren Teils 11 der Konusanordnung 12 spiel frei auf die Achse 1 auflegt, während die zylindrische Außenfläche 14 und des Teils 13 spielfrei an der Innenfläche 15 des Zentrierloches 16 der Felge 3 zur Anlage kommt. Da zwischen den konischen Flächen 21 und 22 dabei kein Spiel vorhanden ist, ist insgesamt überhaupt kein Spiel mehr im zentrierten Zustand vorhanden.

Beim Festspannen der Felge 3 auf der Achse 1 wird zunächst die Felge 3 mit dem Zentrierloch 16 auf die zylindrische Außenfläche 14 aufgeschoben, deren Durchmesser in diesem Zustand noch etwas kleiner ist als der Durchmesser der Innenfläche 15. Danach wird die Felge 3 in Richtung des Pfeiles 7 bewegt, so daß zunächst die Felge 3 an der Anlagefläche 18 zur Anlage kommt und dadurch das Teil 13 der Konusanordnung 12 in Richtung des Pfeiles 7 mitgenommen wird, wobei die Feder 10 gespannt wird und die konische Innenfläche 22 auf die konische Außenfläche 21 aufgleitet und so die Spannzange erweitert wird und die Zentrierung erfolgt. Die Bewegung der Felge 3 erfolgt dabei zum Schluß durch den Drucktopf 5 in Verbindung mit der nicht dargestellten Spannschraube, bis schließlich der Rand 4 des Drucktopfes 5 die Felge 3 fest gegen die Anlagefläche 8 des Flansches 2 drückt.

Bei dieser bekannten Schnellspannvorrichtung hängen die spreizbaren Teile fest an den ringförmigen Teilen 19 und 20, wodurch ihre radiale Spreizbarkeit sehr begrenzt ist.

Bei der erfindungsgemäßen Schnellspannvorrichtung kommt bei der Schnellspannvorrichtung gemäß Fig. 1 eine Konusanordnung gemäß Fig. 2 und 3 zum Einsatz. Gleiche oder sich entsprechende Teile sind mit gleichen Bezugsziffern versehen. Das innere Teil 11 der Konusanordnung ist gegenüber dem in Fig. 1 praktisch unverändert, sie erstrecken sich von dem ringförmigen Teil 20 aus, der auf die Achse 1 aufschiebbar ist. Der wesentliche Unterschied besteht darin, daß die äußeren spreizbaren Teile durch Segmente 23 gebildet sind, die völlig unabhängig voneinander sind, insbesondere nicht mit einem gemeinsamen ringförmigen Teil 19 wie in Fig. 1 verbunden sind. Wenn das Segment 23 mit seiner konischen Innenfläche 22 auf der konischen Außenfläche 21 aufgleitet, wenn eine Fahrzeugfelge gegen die Anlagefläche 18 drückt, so bewegen sich die Segmente 23 radial und zu sich selbst parallel nach außen, bis die zylindrische Außenfläche 14 an der Innenkante eines Zentrierloches einer Felge zur Anlage kommt.

In einer Umfangsnut 24 der Segmente 23 liegt ein Gummiring 25, der die Segmente 23 mit ihren konischen Innenflächen 22 in Anlage an den konischen Außenflächen 21 hält. Außerdem sorgt der Gummiring 25 dafür, daß bei Abnehmen einer Felge sich die spreizbaren Segmente 23 wieder zusammenbewegen, indem sie mit ihren konischen Innenflächen auf den konischen Außenflächen 21 herabrutschen. Um dieses Herabrutschen zu begrenzen, befindet sich an dem ringförmigen Teil 20 ein radial nach außen gerichteter Flansch 26, der von einem radial nach innen gerichteten Flansch 27 an den Segmenten 23 hintergriffen wird, die so die axiale Bewegung der Segmente 23 bzw. dem inneren Teil 11 begrenzt.

In den Segmenten 23 stecken Stifte 28, die radial in Langlöcher 29 in dem inneren Teil 11 eingreifen und so die Segmente 23 in ihrer Umfangslage in bezug zu dem inneren Teil 11 fixieren.

Innerhalb der Segmente 23 ist ein Ring 30 angeordnet, in dem sich radiale Bohrungen 31 befinden, in denen die Stifte 28 geführt sind. Bei Anordnung des Ringes 30 ist ein Eingreifen der Stifte 28 in die Langlöcher 29 nicht unbedingt erforderlich, da der Ring 30 die Umfangslage der Segmente 23 zueinander bestimmt.

## Patentansprüche

1. Schnellspannvorrichtung mit Mittenzentrierung zur Befestigung eines Fahrzeugrades auf der Achse einer Auswuchtmaschine, mit einem auf der Achse (1) fest angeordneten Flansch (2) zur reibschlüssigen Anlage der Felge (3) des Fahrzeugrades, mit Spannmitteln (5) zum Festziehen der Felge gegen den Flansch, mit einer Konusanordnung, die ein äußeres Teil (13) mit einer zylindrischen Außenfläche zum Eingriff in das Zentrierloch des Fahrzeugrades und mit einer konischen Innenfläche und ein inneres Teil (11) aufweist, das eine innere Bohrung zum Aufschieben des inneren Teils auf die Achse der Auswuchtmaschine und eine konische Außenfläche aufweist, die zu der konischen Innenfläche des äußeren Teils komplementär geformt ist und an dieser anliegt, wobei das innere Teil der Konusanordnung durch eine Feder (10) in Richtung auf das Zentrierloch vorgespannt ist und sich von der zylindrischen Außenfläche des äußeren Teils der Konusanordnung ein radialer Flansch (17) mit einer Anlagefläche zur Anlage an der Felge des Fahrzeugrades erstreckt, **dadurch gekennnzeichnet**, daß das äußere Teil (13) durch voneinander getrennte Segmente (23) gebildet ist, die durch Federmittel (25) an dem inneren Teil (11) gehalten sind.

2. Schnellspannvorrichtung nach Anspruch 1, **dadurch gekennzeichnet,** daß die Federmittel durch einen elastischen Ring, vorzugsweise einen Gummiring (25) gebildet sind, der die Segmente mit Spannung umschließt.

3. Schnellspannvorrichtung nach Anspruch 2, **dadurch gekennzeichnet,** daß der elastische Ring bzw. der Gummiring (25) in einer Umfangsnut (24) der Segmente (23) verläuft.

4. Schnellspannvorrichtung nach Anspruch 1, **dadurch gekennzeichnet**, daß die Segmente (23) durch Führungen gegen Bewegung in Umfangsrichtung gesichert sind.

5. Schnellspannvorrichtung nach Anspruch 4, **dadurch gekennzeichnet,** daß die Führungen durch Stifte (28) gebildet sind, die nach innen aus den Segmenten (23) herausragen und in axial verlaufenden Schlitzen (29) in dem inneren Teil (11) der Konusanordnung geführt sind.

6. Schnellspannvorrichtung nach Anspruch 4, **dadurch gekennzeichnet,** daß die Führungen durch Stifte (28) gebildet sind, die in radiale Bohrungen (31) in einem Ring (30) eingreifen, der radial innerhalb der Segmente (23) angeordnet ist.

7. Schnellspannvorrichtung nach Anspruch 1, **dadurch gekennzeichnet**, daß die Segmente (23) radial nach innen gerichtete Kanten (27) aufweisen, die gegenüberliegende Kanten (26) des inneren Teils (14) der Konusanordnung hintergreifen und so ein axiales Herabrutschen der Segmente (23) von dem inneren Teil (11) verhindern.

## Claims

1. A quick-gripping device with central centring for the attachment of a vehicle wheel to the axle of a balancing machine, having a flange (2) disposed securely on the axle (1) for the frictionally-engaged abutment of the rim (3) of the vehicle wheel, having gripping means (5) for tightening the rim against the flange, having a conical arrangement which comprises an outer part (13) with a cylindrical outer face for engagement in the centring hole of the vehicle wheel and having a conical inner face and an inner part (11) comprising an inner bore for sliding the inner part onto the axle of the balancing machine and a conical outer face which is formed to complement the conical inner face of the outer part and abuts it, whereby the inner part of the conical arrangement is biased by a spring (10) towards the centring hole and a radial flange (12) having a bearing surface to abut the rim of the vehicle wheel extends from the cylindrical outer face of the outer part of the conical arrangement,
**characterised in that** the outer part (13) is formed by segments (23) separated from one another, which are retained by spring means (25) on the inner part (11).

2. A quick-gripping device according to Claim 1,
**characterised in that** the spring means are formed by an elastic ring, preferably a rubber ring (25), which encloses the segments with tension.

3. A quick-gripping device according to Claim 2,
**characterised in that** the elastic ring or the rubber ring (25) extends in a circumferential groove (24) of the segments (23).

4. A quick-gripping device according to Claim 1,
**characterised in that** the segments (23) are prevented from moving in the circumferential direction by guides.

5. A quick-gripping device according to Claim 4,
**characterised in that** the guides are formed by pins (28) which inwardly protrude from the segments (23) and are guided in axially extending slots (29) in the inner part (11) of the conical arrangement.

6. A quick-gripping device according to Claim 4,
**characterised in that** the guides are formed by pins (28) which engage in radial bores (31) in a ring (30) which is disposed radially inside the segments (23).

7. A quick-gripping device according to Claim 1,
**characterised in that** the segments (23) comprise radially inwardly directed edges (27), which engage behind opposite edges (26) of the inner part (14) of the conical arrangement and thus prevent the segments (23) sliding down from the inner part (11).

## Revendications

1. Dispositif de fixation rapide avec centrage central pour la fixation d'une roue de véhicule sur l'axe d'une machine d'équilibrage, avec une collerette (2) montée fixe sur l'axe (1) pour le montage à entraînement par friction de la jante (3) de la roue de véhicule, avec des moyens de serrage (5) pour bloquer la jante contre la collerette, avec un ensemble à cône qui présente une pièce extérieure (13) avec une surface externe cylindrique pour l'engagement dans le trou de centrage de la roue de véhicule et avec une surface interne conique et une pièce intérieure (11), qui présente un alésage interne pour enfiler la pièce intérieure sur l'axe de la machine d'équilibrage et une surface externe conique qui est formée complémentaire à la surface interne conique de la pièce extérieure et s'appuie dessus, la pièce intérieure de l'ensemble à cône étant précontrainte par un ressort (10) en direction du trou de centrage et une collerette radiale (17) avec une surface d'appui pour le montage sur la jante de la roue de véhicule s'étendant depuis la surface externe cylindrique de la pièce extérieure de l'installation conique,
caractérisé en ce que la pièce extérieure (13) est constituée par des segments (23) séparés les uns des autres qui sont maintenus, par des moyens à ressort (25), sur la pièce intérieure (11).

2. Dispositif de fixation rapide selon la revendication 1,
caractérisé en ce que les moyens à ressort sont constitués par une bague élastique, de préférence une bague de caoutchouc (25), qui entoure les segments sous tension.

3. Dispositif de fixation rapide selon la revendication 2,
caractérisé en ce que la bague élastique ou respectivement la bague de caoutchouc (25) s'étend dans une rainure périphérique (24) des segments (23).

4. Dispositif de fixation rapide selon la revendication 1,
caractérisé en ce que les segments (23) sont protégés contre un déplacement en direction périphérique par des guidages.

5. Dispositif de fixation rapide selon la revendication 4,
caractérisé en ce que les guidages sont constitués par des broches (28) qui font saillie extérieurement depuis les segments (23) vers l'intérieur et sont guidées dans la pièce intérieure (11) de l'ensemble à cône dans des fentes (29) s'étendant axialement.

6. Dispositif de fixation rapide selon la revendication 4,
caractérisé en ce que les guidages sont constitués par des broches (28) qui sont en prise dans des alésages radiaux (31) dans une bague (30) qui est disposée de manière radiale à l'intérieur des segments (23).

7. Dispositif de fixation rapide selon la revendication 1,
caractérisé en ce que les segments (23) présentent des arêtes (27) dirigées radialement vers l'intérieur qui sont en prise derrière des arêtes opposées (26) de la pièce intérieure (14) de l'ensemble à cône et empêchent, de ce fait, un glissement axial des segments (23) vers le bas depuis la pièce intérieure (11).
